(19) Europäisches Patentamt
European Patent Office
Office européen des brevets

(11) **EP 2 948 350 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(21) Anmeldenummer: **13807922.3**

(22) Anmeldetag: **30.11.2013**

(51) Int Cl.:
***B60T 8/1755*** *(2006.01)*  ***B60T 7/22*** *(2006.01)*
***B60W 30/09*** *(2012.01)*

(86) Internationale Anmeldenummer:
**PCT/EP2013/003616**

(87) Internationale Veröffentlichungsnummer:
**WO 2014/114311 (31.07.2014 Gazette 2014/31)**

(54) **VERFAHREN ZUM ERMITTELN EINES AUSLÖSEKRITERIUMS FÜR EINE BREMSUNG UND EIN NOTBREMSSYSTEM ZUR DURCHFÜHRUNG DES VERFAHRENS**

METHOD FOR DETERMINING AN ACTIVATION CRITERION FOR A BRAKE APPLICATION AND EMERGENCY BRAKE SYSTEM FOR PERFORMING THE METHOD

PROCÉDÉ DE DÉTERMINATION D'UN CRITÈRE DE DÉCLENCHEMENT D'UN FREINAGE ET SYSTÈME DE FREINAGE D'URGENCE POUR METTRE EN OEUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2013 DE 102013001229**

(43) Veröffentlichungstag der Anmeldung:
**02.12.2015 Patentblatt 2015/49**

(73) Patentinhaber: **WABCO GmbH**
**30453 Hannover (DE)**

(72) Erfinder:
• **MEYER, Rüdiger**
**30449 Hannover (DE)**
• **SANDKÜHLER, Dirk**
**59505 Bad Sassendorf (DE)**
• **SULZBACHER, Christian**
**30559 Hannover (DE)**

(74) Vertreter: **Lauerwald, Jörg**
**Wabco GmbH**
**Postfach 91 12 62**
**30432 Hannover (DE)**

(56) Entgegenhaltungen:
WO-A1-2008/031662   DE-A1-102004 056 120
DE-A1-102005 002 760   DE-A1-102009 012 226
DE-A1-102009 020 649   US-A1- 2004 193 374

EP 2 948 350 B1

**Beschreibung**

Die Erfindung betrifft ein Verfahren zum Ermitteln eines Auslösekriteriums für eine Bremsung und ein Notbremssystem zur Durchführung des Verfahrens.

Derartige Notbremssysteme werden in Nutzfahrzeugen eingesetzt, um bei Erkennen einer zukünftigen Kollision des Eigenfahrzeuges mit einem Objekt, eine Bremsung zu veranlassen. Als Kollision wird dabei ein Zusammenprall des Eigenfahrzeuges mit einem z.B. vorausfahrenden Verkehrsteilnehmer oder auch einem stationären Objekt, z.B. einem Verkehrsschild oder einem stehenden Verkehrsteilnehmer, verstanden.

Zum Beurteilen, ob das Eigenfahrzeug zukünftig mit einem Objekt kollidiert, wird nachdem ein Objekt in einem Umfeld des Eigenfahrzeuges erkannt wurde ein zukünftiges Fahrverhalten des Eigenfahrzeuges im Bezug zum Objekt bestimmt. Dabei wird insbesondere unter Berücksichtigung von dynamischen Parametern des Eigenfahrzeuges sowie des Objektes ermittelt, ob das Eigenfahrzeug dem Objekt noch ausweichen oder durch eine Bremsung ein Zusammenprall verhindert werden kann, d.h. der Fahrer die Kollision theoretisch noch verhindern kann. Ist der Fahrer selbst nicht mehr imstande, eine Kollision zu vermeiden, wird automatisch eine Notbremsung des Eigenfahrzeuges veranlasst.

Ein derartiges Bremssystem ist in der DE 10 2010 006 214 A1 beschrieben. Nach dem Erkennen eines Objektes im Umfeld des Eigenfahrzeuges ist vorgesehen, den letzten möglichen Eingriffszeitpunkt für eine Bremsung unter Berücksichtigung der derzeitigen Dynamik des Eigenfahrzeuges und des Objektes sowie der Reaktionszeit des Fahrers zu bestimmen und abhängig davon eine Bremsung einzuleiten, um eine Kollision zu verhindern oder die Folgen einer Kollision zu mindern. Weiterhin einbezogen wird dabei ein letzter möglicher Ausweichzeitpunkt unter der Annahme, dass die Ausweichtrajektorie des Eigenfahrzeuges einer Parabel oder einem Kreis entspricht.

Die EP 1 057 159 B1 beschreibt ein Verfahren zur Verhinderung einer Kollision, bei dem ein minimaler Abstand zu einem vorausfahrenden Fahrzeug berechnet wird, der erforderlich ist, um bei einer maximal möglichen Fahrzeugverzögerung nicht mit dem vorausfahrenden Fahrzeug zu kollidieren. Berücksichtigt werden dabei die Relativgeschwindigkeit und die Relativbeschleunigung zwischen beiden Fahrzeugen. Weiterhin wird auch ein minimaler Abstand berücksichtigt, der für ein mögliches Ausweichmanöver (Vorbeilenken des Fahrzeuges) benötigt wird. Anhand dieser beiden Abstände wird für den Fall einer möglichen Kollision eine Notbremsung eingeleitet.

Die DE102009012226A1 beschreibt ein Verfahren zur Vermeidung oder Folgeminderung einer Kollision eines Fahrzeugs mit einem Hindernis.

Die WO2008031662A1 offenbart ein Verfahren zur Vermeidung oder Folgenminderung der Kollision eines Fahrzeugs mit mindestens einem Objekt.

Die DE102009020649A1 beschreibt ein Verfahren und eine Vorrichtung zur Kollisionsvermeidung für ein Fahrzeug durch Ausweichen vor einem Hindernis, gemäß dem Oberbegriff des unabhängigen Anspruchs 1.

Der Erfindung liegt die Aufgabe zugrunde, ein Verfahren zum Ermitteln eines Auslösekriteriums für eine Bremsung und ein Notbremssystem zur Durchführung des Verfahrens zu schaffen, die eine hohe Sicherheit ermöglichen.

Diese Aufgabe wird durch ein Verfahren nach Anspruch 1 und ein Notbremssystem nach Anspruch 17 gelöst. Die Unteransprüche beschreiben bevorzugte Weiterbildungen.

Somit ist zunächst vorgesehen, das Umfeld des Eigenfahrzeuges zu beobachten und bei Erfassen eines Objektes im Umfeld zu überprüfen, ob sich das Eigenfahrzeug auf einem Kollisionskurs mit dem Objekt befindet. Zum Beobachten des Umfeldes können z. B. fahrzeuginterne Abstandssensoren oder ein Kamerasystem verwendet werden, aus deren Signalen, wie allgemein bekannt, ein Abstand sowie dynamische Eigenschaften des Objektes, z.B. die Geschwindigkeit und die Beschleunigung, erkannt werden können. So kann beispielsweise ermittelt werden, ob das Objekt ein fahrender oder stehender Verkehrsteilnehmer oder ein stationäres Objekt, z.B. ein Straßenschild ist.

Zum Überprüfen, ob ein Kollisionskurs vorliegt, werden insbesondere die Relativgeschwindigkeiten und die Relativbewegungen zueinander berücksichtigt, um einzuschätzen, ob überhaupt eine Kollisionswahrscheinlichkeit gegeben ist. Dazu kann z.B. eine Extrapolation der gegenwärtigen Trajektorien des Eigenfahrzeuges und des Objektes durchgeführt werden, um zu erkennen, ob sich beide Trajektorien schneiden. Zur Ermittlung des dynamischen Verhaltens des Eigenfahrzeugs kann auf eine fahrzeuginterne Sensorik, z.B. ein GPS-System, Beschleunigungssensoren oder Geschwindigkeitssensoren, zurückgegriffen werden. Ebenfalls denkbar sind Regensensoren, um z.B. zusätzlich die Haftung der Reifen auf dem Asphalt berücksichtigen zu können.

Wurde erkannt, dass sich das Eigenfahrzeug mit dem Objekt auf einem Kollisionskurs befindet, wird erfindungsgemäß ein Ausweichkriterium bestimmt. Das Ausweichkriterium gibt an, ob es insbesondere für den Fahrzeugführer theoretisch noch möglich ist, das Fahrzeug durch einen Lenkeingriff am Objekt vorbeizulenken. Dazu wird in Abhängigkeit des Fahrzeugverhaltens zum jeweiligen Zeitpunkt eine Ausweichtrajektorie für das Eigenfahrzeug bestimmt und beurteilt, ob das zukünftig auf dieser Ausweichtrajektorie fahrende Eigenfahrzeug das Objekt berühren wird oder nicht, d.h. ein Ausweichen theoretisch noch möglich ist oder nicht. Als Trajektorie wird hier insbesondere eine räumliche Trajektorie verstanden, d.h. eine mathematische Beschreibung eines möglichen zukünftigen Fahrweges des Eigenfahrzeuges.

Als Ausweichtrajektorie wird dabei erfindungsgemäß eine S-förmige Trajektorie angenommen, die das Ausweichverhalten des Eigenfahrzeuges möglichst genau beschreibt. Dabei wird insbesondere berücksichtigt, dass sich das Eigenfahrzeug nach dem Ausweichen im Wesentlichen wieder in der gleichen Ausrichtung befindet wie vor dem Ausweichen, wobei sich die Ausrichtung auf den Fahrschlauch bezieht, in dem sich das Eigenfahrzeug vor dem Ausweichen bewegt. Als Fahrschlauch wird dabei der Fahrweg des Eigenfahrzeuges bezeichnet, wobei nicht nur der vergangene Fahrweg betrachtet werden kann, sondern durch Prädiktion anhand von aktuellen Fahrzeugdaten auch ein zukünftiger Fahrweg extrapolierbar ist.

Auf einer geraden Fahrbahn verläuft der Fahrschlauch im Wesentlichen entlang einer Achse, so dass eine Ausweichtrajektorie bestimmt wird, bei der das Eigenfahrzeug nach dem Ausweichvorgang im Wesentlichen parallel zum Fahrschlauch vor dem Ausweichen ausgerichtet ist. Bei einem Ausweichen in einer Kurve mit konstantem Kurvenwinkel folgt der Fahrschlauch dem Kurvenverlauf und es wird eine Ausweichtrajektorie bestimmt, bei der das Eigenfahrzeug nach dem Ausweichen im Wesentlichen tangential zum Fahrschlauch vor dem Ausweichen ausgerichtet ist, so dass das Eigenfahrzeug nach dem Ausweichen lediglich auf einer anderen Fahrspur dem Kurvenverlauf weiterhin folgt.

Als S-förmige Trajektorie wird vorzugsweise eine Trajektorie verstanden, die mindestens einen Wendepunkt aufweist, was mathematisch einem Vorzeichenwechsel in der Krümmung der Trajektorie entspricht. Wird beispielsweise ein Ausweichvorgang auf gerade Strecke betrachtet, bei dem der Fahrzeugführer das Lenkrad erst nach rechts und anschließend wieder nach links einlenkt (Ausweichen auf die rechte Fahrspur), so weist die Ausweichtrajektorie einen Wendepunkt beim Wechsel des Lenkeinschlages von rechts nach links auf.

Zur Vereinfachung der Berechnung der Ausweichtrajektorie in einer Kurvenfahrt, kann die Ausweichtrajektorie insbesondere auch in Polarkoordinaten bestimmt werden. Daraus ergibt sich der Vorteil, dass die Ausweichtrajektorie in Abhängigkeit des zurückgelegten Kurvenwinkels einfacher ermittelt werden kann. Wie allgemein bekannt, wird ein Polarkoordinatensystem dabei durch einen Kurvenwinkel und einen Kurvenradius aufgespannt, um z.B. trigonometrische Funktionen einfacher beschreiben zu können.

Eine solche S-förmige Ausweichtrajektorie kann vorzugsweise durch eine Funktion beschrieben werden, die als additiven Term beispielsweise eine trigonometrische Funktion aufweist, insbesondere durch einen gleitenden Sinus $(T(k) \sim k - \sin(k))$. Dabei können zusätzliche Skalierungsparameter eingeführt werden, z.B. der Abstand zwischen dem Eigenfahrzeug und dem Objekt, eine Breite des Eigenfahrzeuges und des Objektes und ein lateraler Versatz zwischen der Mittelachse des Objektes und des Eigenfahrzeuges, so dass die Ausweichtrajektorie in Abhängigkeit der Skalierungsparameter eindeutig definierbar ist.

Insbesondere kann bei der Bestimmung der Skalierungsparameter berücksichtigt werden, dass sich das erkannte Objekt während des Ausweichvorgangs noch in den Bereich der Ausweichtrajektorie bewegt, z.B. durch Beschleunigen oder seitliches Einlenken, wodurch sich auch der Abstand und der laterale Versatz zwischen Objekt und Fahrzeug während des Ausweichvorgangs verändert. Dazu können bei der Bestimmung der Ausweichtrajektorie auch die Quergeschwindigkeit und die Beschleunigung des Objektes zum Zeitpunkt der Bestimmung der Ausweichtrajektorie berücksichtigt werden. Daraus ergibt sich der Vorteil, dass in der Ausweichtrajektorie auch ein prädizierter Fahrweg des Objektes berücksichtigt werden kann.

Erfindungsgemäß wird beim Bestimmen des Ausweichkriteriums zusätzlich eine maximale Querbeschleunigung berücksichtigt, die auf das Eigenfahrzeug wirkt, wenn es sich entlang der Ausweichtrajektorie bewegt. Dazu wird vorzugsweise die Krümmung bzw. die Krümmungsfunktion der Ausweichtrajektorie betrachtet, wobei an der oder den Stellen, an denen der Betrag der Krümmung maximal ist, auch die auf das Eigenfahrzeug wirkende Querbeschleunigung maximal ist. Vorgesehen ist dabei, die Extremwerte der Krümmungsfunktion, die sich insbesondere aus der ersten Ableitung der Krümmungsfunktion ergeben, zu bestimmen und die Querbeschleunigung des Eigenfahrzeuges an diesen Stellen zu berechnen und mit mindestens einem Schwellwert zu vergleichen. Der Schwellwert kann dabei beispielsweise so gewählt werden, dass bei Überschreiten der maximalen Querbeschleunigung über den Schwellwert das Eigenfahrzeug einseitig die Haftung zum Boden verliert.

Erfindungsgemäß ist das Ausweichkriterium also nur dann erfüllt, wenn zum einen eine Ausweichtrajektorie gefunden werden kann und weiterhin die maximale Querbeschleunigung auf dieser Ausweichtrajektorie unterhalb des Schwellwertes liegt, d.h. der Fahrer theoretisch noch ausweichen kann, ohne seitlich wegzukippen. Das hat den Vorteil, dass nicht eine Ausweichtrajektorie für einen Ausweichvorgang in Betracht gezogen wird, bei der auf das Eigenfahrzeug zu hohe Querbeschleunigungen wirken.

Vorzugsweise können weitere Ausweichkriterien berücksichtigt werden, z.B. ob auf eine Gegenfahrbahn ausgewichen wird oder sich neben dem Eigenfahrzeug noch weitere Fahrzeuge befinden und somit ein Ausweichen auch deshalb nicht möglich ist.

In Abhängigkeit des Ausweichkriteriums wird erfindungsgemäß ein Auslösekriterium ermittelt, wobei bei Erfüllen des Auslösekriteriums eine automatische Bremsung des Eigenfahrzeuges eingeleitet wird. Das Auslösekriterium ist dabei so lange nicht erfüllt, so lange das Ausweichkriterium noch erfüllt ist, so dass eine Bremsung erst dann veranlasst wird, wenn ein Ausweichen mit den theoretischen Annahmen nicht mehr möglich ist.

Vorzugsweise kann das Auslösekriterium noch von einem Bremskriterium abhängig sein, das so lange erfüllt ist, wie der Fahrer selber noch eine Bremsung durchführen kann oder die Längsbeschleunigung des Eigenfahrzeuges über einem bestimmten Wert liegt.

Vorteil des erfindungsgemäßen Verfahrens ist, dass eine automatische Bremsung wirklich erst dann eingeleitet wird, wenn es für den Fahrer keine andere Möglichkeit mehr gibt, die Kollision zu vermeiden. Dabei wird auf einfacher Weise geprüft, ob ein Ausweichen unter Einhaltung von Parametern theoretisch noch möglich ist, wobei eine mathematisch einfach handhabbare Funktion als Ausweichtrajektorie verwendet wird, die insbesondere auch bei Kurvenfahrten einfach berechnet werden kann und aus der auch in Kurvenfahrten die maximalen Querbeschleunigungen einfach bestimmbar sind.

Die Erfindung wird im Folgenden anhand der beiliegenden Zeichnungen an einigen Ausführungsformen erläutert. Es zeigen:

Fig. 1    ein Fahrzeug mit einem Notbremssystem auf einem Kollisionskurs mit mindestens einem Objekt,

Fig. 2    eine Ausweichtrajektorie eines Eigenfahrzeuges und ein erkanntes Objekt,

Fig. 3    eine lineare Annäherung einer Ausweichtrajektorie,

Fig. 4    das Fahrzeug auf einem Kollisionskurs mit einem Objekt in einer Kurvenfahrt, und

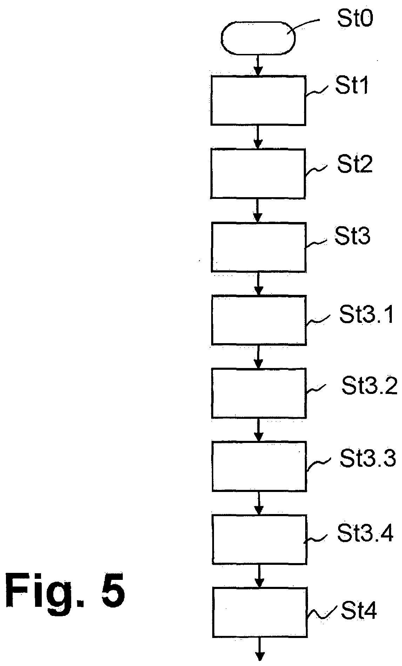

Fig. 5    ein Flussdiagramm des erfindungsgemäßen Verfahrens.

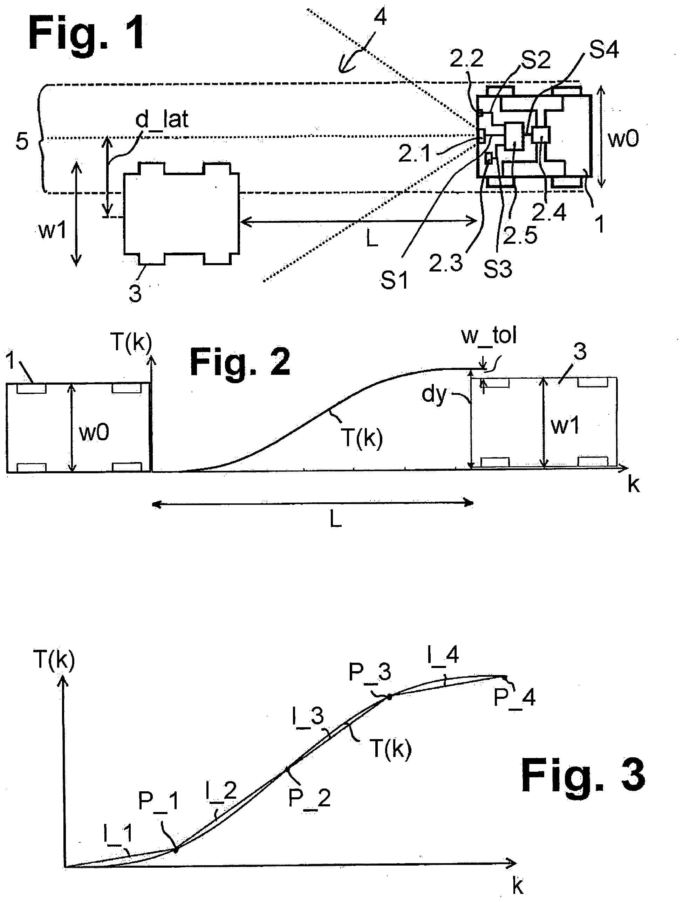

Das Eigenfahrzeug 1, vorzugsweise ein Nutzfahrzeug, insbesondere ein LKW, weist gemäß Figur 1 ein Kamerasystem 2.1, einen Abstandssensor 2.2, eine Sensorik 2.3, ein Bremssystem 2.4 und eine ECU 2.5 auf. Die ECU 2.5 empfängt dabei Signale S1 - S3 von den Elementen 2.1, 2.2, 2.3, verarbeitet diese und übermittelt Signale S4 an das Bremssystem 2.4.

Die Sensorik 2.3 ermittelt insbesondere fahrdynamische Eigenschaften des Eigenfahrzeuges 1 und weist beispielsweise ein GPS-System, Geschwindigkeitssensoren, Beschleunigungssensoren oder Regensensoren, auf. Das Kamerasystem 2.1 und der Abstandssensor 2.2 sind in der Lage ein Umfeld 4 des Eigenfahrzeuges 1 zu beobachten und einzelne Objekte 3 zu erfassen. Die dynamischen Eigenschaften, beispielsweise die Geschwindigkeit oder die Beschleunigung, des erfassten Objektes 3 werden entweder vom Kamerasystem 2.1 oder vom Abstandssensor 2.2 direkt ermittelt oder die erfassten Signale S1, S2 an die ECU 2.5 oder eine weitere nicht gezeigte Verarbeitungseinheit im Eigenfahrzeug 1 zur Weiterverarbeitung übermittelt.

Somit kann zunächst erkannt werden, ob sich im Umfeld 4 des Eigenfahrzeuges 1 ein Objekt 3 befindet und mit welcher Relativgeschwindigkeit r_v und Relativbeschleunigung r_a sich das Objekt 3 zum Eigenfahrzeug 1 bewegt. Ferner kann ein Abstand L sowie eine lateraler Versatz d_lat zum erkannten Objekt 3 bestimmt werden, wobei der Abstand L den Abstand vom Eigenfahrzeug 1 zum Objekt 3 in Fahrtrichtung A bezeichnet und der laterale Versatz d_lat den Abstand von einer Mittelachse des Eigenfahrzeuges 1 zur Mittelachse des erkannten Objektes 3 senkrecht zur Fahrtrichtung A, wie in Figur 1 dargestellt.

Die Erfassung ist dabei nicht auf ein Objekt 3 beschränkt. Vielmehr können mehrere Objekte 3 erfasst werden und unter gegebenen Bedingungen zu einem Objektraum OR zusammengefasst werden. Beispielsweise können zwei nebeneinander fahrende Verkehrsteilnehmer, deren Abstand in einem Toleranzbereich geringer ist als eine Breite w0 des Eigenfahrzeuges 1, zu einem Objektraum OR zusammengefasst werden und somit als ein Objekt 3 behandelt werden.

Wird im Umfeld 4 des Eigenfahrzeuges 1 ein Objekt 3 erkannt, so wird zunächst geprüft, ob sich das Eigenfahrzeug 1 auf einem Kollisionskurs mit dem erkannten Objekt 3 befindet. Dazu können beispielsweise die derzeitigen Fahrwege des Objektes 3 und des Eigenfahrzeuges 1 in Abhängigkeit der ermittelten dynamischen Eigenschaften extrapoliert werden, um zu erkennen, ob das Objekt 3 das Eigenfahrzeug 1 beispielsweise innerhalb eines vorher definierten Zeitraumes dt kreuzt.

Das erkannte Objekt 3 kann dabei auch stationär sein, d.h. es kann sich um ein Straßenschild, einen stehenden Verkehrsteilnehmer oder auch eine Fahrbahnbegrenzung handeln.

Wird festgestellt, dass sich das Eigenfahrzeug 1 auf einem Kollisionskurs mit einem erkannten Objekt 3 befindet, wird anschließend mindestens ein Ausweichkriterium K_avoid bestimmt, das angibt, ob es für den Fahrer des Eigenfahrzeuges 1 theoretisch noch möglich ist, das erkannte Objekt 3 zu umfahren.

Dazu wird eine Ausweichtrajektorie T(k) mit einem Trajektorienparameter k bestimmt, die vorzugsweise in Abhängigkeit des Abstandes L und des lateralen Versatzes d_lat zum erkannten Objekt 3 einen plausiblen Ausweichweg beschreibt, den der Fahrer des Eigenfahrzeuges 1 fährt, wenn er zu diesem Zeitpunkt ausweicht. Als Ausweichtrajektorie T(k) wird erfindungsgemäß eine S-förmige Trajektorie angenommen, die einen Ausweichvorgang beschreibt, bei dem das Eigenfahrzeug 1 vor und nach dem Ausweichvorgang im Wesentlichen gleich ausgerichtet ist, wobei sich die Ausrichtung auf den Fahrschlauch 5 des Eigenfahrzeuges 1 vor dem Ausweichen bezieht.

4

Als Fahrschlauch 5 wird dabei der Fahrweg des Eigenfahrzeuges 1 unter Berücksichtigung der Ausdehnung des Eigenfahrzeuges 1 bezeichnet, wobei nicht nur der vergangene Fahrweg betrachtet werden kann, sondern durch Prädiktion anhand von aktuellen Fahrzeugdaten auch ein zukünftiger Fahrweg extrapolierbar ist.

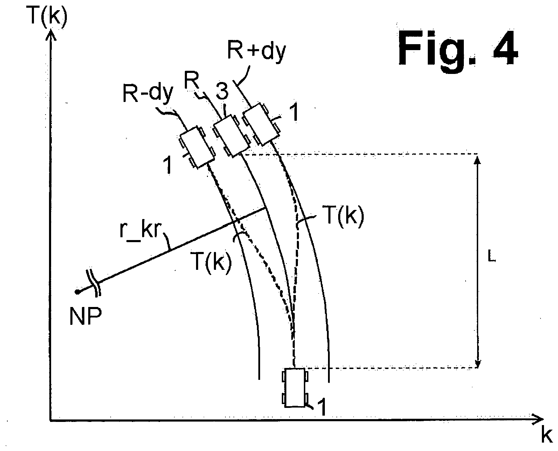

Wie in Figur 1 gezeigt, verläuft der Fahrschlauch 5 auf einer geraden Fahrbahn im Wesentlichen entlang einer parallel zur Fahrtrichtung A liegenden Achse, so dass in dem Fall eine Ausweichtrajektorie T(k) bestimmt wird, bei der das Eigenfahrzeug 1 nach dem Ausweichvorgang im Wesentlichen parallel zum Fahrschlauch 5 ausgerichtet ist. Bei einem Ausweichen in einer Kurve mit konstantem Kurvenradius R folgt der Fahrschlauch 5 dem Kurvenverlauf (Fig. 4) und es wird eine Ausweichtrajektorie T(k) bestimmt, bei der das Eigenfahrzeug 1 nach dem Ausweichen im Wesentlichen tangential zum Fahrschlauch 5 ausgerichtet ist, so dass das Eigenfahrzeug 1 nach dem Ausweichen lediglich auf einer anderen Fahrspur dem Kurvenverlauf weiterhin folgt, so wie es in Figur 4 dargestellt ist.

Bei der Bestimmung der Ausweichtrajektorie T(k) kann insbesondere auch berücksichtigt werden, dass sich das Objekt 3 in Relation zum Eigenfahrzeug 1 bewegt. Dadurch ist der Abstand L, der als Parameter in der Ausweichtrajektorie T(k) berücksichtigt wird, unter Umständen nicht konstant. Ebenso ist der laterale Versatz d_lat zwischen Eigenfahrzeug 1 und dem Objekt 3 nicht konstant. Beides kann bei der Ermittlung der Ausweichtrajektorie berücksichtigt werden. Dafür kann insbesondere anhand der erkannten dynamischen Eigenschaften des Objektes 3 präjudiziert werden, wie sich das Objekt 3 während des Ausweichvorgangs bewegt und die Ausweichtrajektorie T(k) entsprechend angepasst werden.

Als S-förmige Ausweichtrajektorie T(k) wird insbesondere ein gleitende Sinus (s. Fig. 2) verwendet, wobei der gleitende Sinus gegeben ist durch die Funktion

$$T(k) = a*k + b*sin(c*k),$$

wobei k der Trajektorienparameter ist, T(k) die Ausweichtrajektorie in Abhängigkeit des Trajektorienparameters k und a, b und c Skalierungsparameter sind, die insbesondere abhängig sind vom Abstand L zwischen dem Eigenfahrzeug 1 und dem Objekt 3 sowie vom lateralen Versatz d_lat und der Breiten w0 des Eigenfahrzeuges 1 sowie der Breite w1 des Objektes 3.

Somit enthält die Ausweichtrajektorie T(k) als additiven Term eine trigonometrische Funktion. Zudem weist die Ausweichtrajektorie T(k) einen Wendepunkt WP auf, der einem Krümmungswechsel der Ausweichtrajektorie T(k) bzw. einem Wechsel des Lenkeinschlags entspricht. Bei einem Ausweichvorgang schlägt der Fahrzeugführer also das Lenkrad relativ zum Ausgangseinschlag erst in eine Richtung ein und lenkt dann am Wendepunkt WF in die andere Richtung ein, um das Eigenfahrzeug 1 wieder in seine ursprüngliche Ausrichtung relativ zum Fahrschlauch 5 zu bringen. Da der Sinus in der Funktion periodisch ist und nur ein Ausweichvorgang betrachtet wird, wird nur die erste Periode des gleitenden Sinus betrachtet, d.h. insbesondere Werte für k in einem Intervall von 0 bis 2*Pi bzw. 0 bis 360°.

Die Ausweichtrajektorie T(k) kann weiterhin in unterschiedlichen Koordinatensystemen betrachtet werden: Bei einer Geradeausfahrt (Fig. 1) wird die Ausweichtrajektorie T(k) vorzugsweise in kartesischen Koordinaten beschrieben, wobei der Trajektorienparameter k der x-Koordinate und der Funktionswert T(k=x) der y-Koordinate entspricht und gemäß Fig. 2 die x-Koordinate parallel zur Fahrtrichtung A und die y-Koordinate senkrecht zur Richtung A zeigt.

Bei einer Fahrt in einer Kurve, bei der die Ausweichtrajektorie T(k) von einem Kurvenradius R auf einen anderen Kurvenradius R +/- dy überführt (s. Fig. 4), wobei die Kurvenradien R, R +/- dy jeweils den gleichen Nullpunkt NP als Bezugspunkt haben (Fahrschlauchwechsel in einer Kurve), wird die Ausweichtrajektorie T(k) vorzugsweise in Polarkoordinaten angesetzt, wobei der Trajektorienparameter k einem Kreiswinkel phi entspricht und der Funktionswert T(Phi) einem Kreisradius r_kr, der durch den Abstand des Eigenfahrzeuges 1 zum Nullpunkt NP der Kurve gegeben ist. Dadurch kann ein Ausweichvorgang in einer Kurve mit annähernd konstantem Kurvenradius R einfacher beschrieben werden. Der Übergang von kartesischen Koordinaten zu Polarkoordinaten erfolgt dabei im Wesentlich durch eine Substitution von x durch Phi*R, so dass der gleitende Sinus T(Phi) in Polarkoordinaten im Wesentlichen beschrieben wird durch:

$$T(Phi) = r\_kr(Phi) = a*Phi*R – b*sin(c*Phi*R) + R.$$

Um den gleitenden Sinus auf die jeweilige Fahrsituation des sich auf dem Kollisionskurs befindlichen Eigenfahrzeuges 1 zu skalieren, werden die Skalierungsparameter so gewählt, dass die Ausweichtrajektorie T(k) bei k=L den Wert (d_lat + w0/2 + w1/2 +w_tol) = dy (Ausweichbreite) annimmt, wobei w0 und w1 die Breiten des Eigenfahrzeugs 1 bzw. des Objektes 3 und w_tol eine Toleranzbreite angibt. Somit ergibt sich eine Ausweichtrajektorie T(k), bei der sich das Eigenfahrzeug 1 nachdem es die Länge L zurückgelegt hat mit einer Toleranzbreite w_tol neben dem Objekt 3 befindet.

Unter Berücksichtigung, dass nur eine Periode des gleitenden Sinus betrachtet wird und die Länge L nach einer Periode erreicht sein soll, ergibt sich die Ausweichtrajektorie zu:

$$T(x) = dy*x/L - dy/2Pi*sin(2Pi*x/L) \qquad \text{(Gleichung 1)}$$

in kartesischen Koordinaten, und

$$T(Phi) = dy*R*Phi/L - dy/2Pi*sin(2Pi*R*Phi/L) + R \qquad \text{(Gleichung 2)}$$

mit phi$\in$L/R; T(0) = R; T(L/R)= R +/- dy
in Polarkoordinaten. Im Folgenden wird die Ausweichtrajektorie T(k) unabhängig vom Koordinatensystem, also mit dem allgemeinen Trajektorienparameter k betrachtet.

Ist die Ausweichtrajektorie T(k) bestimmt, muss weiterhin geprüft werden, ob es für das Eigenfahrzeug 1 möglich ist, auf dieser Ausweichtrajektorie T(k) auszuweichen. Insbesondere wird dafür eine maximale Querbeschleunigung a_max des Eigenfahrzeuges 1 ermittelt, so dass geprüft werden kann, ob das Eigenfahrzeug 1 beim Entlangfahren auf der Ausweichtrajektorie T(k) beispielsweise umkippen würde.

Dazu wird zunächst eine Krümmung Kappa(k) der Ausweichtrajektorie T(k) bestimmt, die sich aus dem Kehrwert des Radius R(k) an der Stelle k der Ausweichtrajektorie T(k) ergibt

$$Kappa(k) = 1/R(k) \qquad \text{(Gleichung 3)}$$

Der Radius R(k) der Ausweichtrajektorie T(k) ergibt sich wiederum aus der ersten und der zweiten Ableitung der Ausweichtrajektorie T(k) nach dem Trajektorienparameter k:

$$R = [(1+ (dT(k)/dk)^2)^{\wedge}3/2]/(d^2T(k)/dk^2) \qquad \text{(Gleichung 4)}$$

Unter der Annahme, dass sich die Geschwindigkeit des Eigenfahrzeuges 1 während des Ausweichvorgangs nicht ändert, wirken an den Stellen der höchsten Krümmung Kappa(k) der Ausweichtrajektorie T(k) auch die höchsten Querbeschleunigungen a_quer auf das Eigenfahrzeug 1. Aber auch bei einer Veränderung der Geschwindigkeit des Eigenfahrzeuges 1, d.h. bei positiver oder negativer Beschleunigung auf der Ausweichtrajektorie T(k), verschieben sich die Positionen der maximalen Querbeschleunigung a_max nur minimal in Relation zu den Positionen der maximalen Krümmung. Daher kann die maximale Querbeschleunigung a_max in guter Näherung insbesondere aus den Extremstellen Kappa_max_1, Kappa_max_2 der Krümmung Kappa (k) ermittelt werden. Bei einer S-förmigen Ausweichtrajektorie T(k) ergeben sich dabei zwei Extremstellen Kappa_max_1, Kappa_max_2.

Zur Bestimmung der Extremwerte Kappa_max_1, Kappa_max_2 wird die Gleichung 3 mithilfe der Gleichung 1 und 4 ermittelt und die Ableitung Kappa'(k) = dy/dKappa*Kappa(k) gebildet. Die Extremwerte Kappa_max_1, Kappa_max_2 ergeben sich aus den Nullstellen der Ableitung Kappa'(k)=0, wobei insbesondere die x-Werte x_max_1, x_max_2 der Extremstellen Kappa_max_1, Kappa_max_2 für die spätere Berechnung der maximalen Querbeschleunigung a_max notwendig sind.

Die Querbeschleunigung a_quer(k) des Eigenfahrzeuges 1 an der Stelle k ergibt sich aus der Formel:

$$a\_quer(k) = v(k)^2*Kappa(k), \qquad \text{(Gleichung 5)}$$

wobei die Geschwindigkeit v(k) des Eigenfahrzeuges 1 nach einem zurückgelegten Fahrweg s auf der Ausweichtrajektorie T(k) unter Annahme einer konstanten Longitudinalbeschleunigung a_long des Eigenfahrzeuges 1 in Fahrtrichtung A gegeben ist durch

$$v(s) = sqrt((v\_0)^2 + 2*a\_long*s), \qquad \text{(Gleichung 6)}$$

wobei v_0 die Geschwindigkeit vor dem Ausweichen ist, a_long die Longitudinalbeschleunigung in Fahrtrichtung A und s die zurückgelegte Strecke ab dem Beginn des Ausweichens ist.

Somit ergeben sich mit Gleichung 5 und 6 zwei Lösungen für die maximale Querbeschleunigung:

$$a\_max = ((v\_0)^2 + 2*a\_long*s))*Kappa\_max\_1/2, \qquad \text{(Gleichung 7)}$$

wobei von den zwei Lösungen für a_max nur der betragsmäßig größere Wert für die nachfolgenden Verfahrensschritte relevant ist.

Zur Bestimmung der zurückgelegten Strecke s, wird gemäß Figur 3 die Ausweichtrajektorie T(k) zwischen den Extremstellen Kappa_max_1, Kappa_max_2 und dem Wendepunkt WP linear angenähert, so dass sich nach einfacher geometrischer Betrachtung die Strecke s aus den Verbindungsgeraden l_i, i=1,...4 über die x- und y-Koordinaten der Extrempunkte Kappa_max_1, Kappa_max_2 und des Wendepunktes WP ergeben. Die Punkte P_i, i=1...4 gemäß Fig. 3 sind gegeben durch:

$$P\_1 = (x\_max\_1, T(x\_max\_1))$$

$$P\_2 = (L/2, dy/2)$$

$$P\_3 = (x\_max\_2, T(x\_max\_2))$$

$$P\_4 = (L, dy)$$

Die Strecken s zwischen den Punkten P_i ergeben sich trivialerweise aus den Koordinaten der Punkte P_i, so dass mithilfe der Gleichung 7 die maximale Querbeschleunigung a_max ermittelt werden kann, wobei die Longitudinalbeschleunigung a_long Fahrzeugintern von der Sensorik 2.3 gemessen wird. Dabei wird vorzugsweise berücksichtigt, ob sich die Längsbeschleunigurig a_long im betrachteten Zeitpunkt konstant ist oder sich verändert, d.h. das Eigenfahrzeug seine Geschwindigkeit v beibehält oder nicht.

Wird das Eigenfahrzeug 1 beschleunigt (a_long>0), so ist an der zweiten Extremstelle Kappa_max_2 eine höhere Querbeschleunigung a_quer zu erwarten als an der ersten Extremstelle Kappa_max_1. Somit ist als Strecke s in Gleichung 7 die Strecke bis zum Punkt P_3 (s=l_1 + l_2 + l_3) relevant. Beschleunigt das Eigenfahrzeug 1 während des Ausweichens nicht (a_long=0), so sind die Querbeschleunigungen a_quer an beiden Punkten P_1 und P_3 gleich, die Strecke s kann also entsprechend gewählt werden (s=l_1 oder s=l_1+l_2+l_3). Wird das Eigenfahrzeug 1 gebremst (a_long<0), so ist nur die maximale Querbeschleunigung a_max am Punkt P_1 entscheidend, d.h. in Gleichung 7 gilt s=l_1.

Ist eine maximale Querbeschleunigung a_max ermittelt, so wird geprüft, ob diese ermittelte maximale Querbeschleunigung a_max einen Schwellwert a_thresh überschreitet. Der Schwellwert a_thresh ist dabei beispielsweise so gewählt, dass bei einem Überschreiten das Eigenfahrzeug 1 umkippen würde. Somit kann in Abhängigkeit der ermittelten Ausweichtrajektorie T(k) geprüft werden, ob das Eigenfahrzeug 1 auf dieser Ausweichtrajektorie T(k) überhaupt sicher ausweichen kann. Dabei können auch mehrere Schwellwerte a_thresh angesetzt werden, um weitere Sicherheitsparameter zu berücksichtigen. Insbesondere können Toleranzgrenzen vorgesehen sein, so dass bei Überschreiten eines ersten Schwellwertes a_thresh_1, der unterhalb eines zweiten Schwellwertes a_thresh_2 liegt, z.B. zunächst ein Warnsignal S6 an den Fahrer ausgegeben wird, so dass dieser rechtzeitig gewarnt wird, dass ein Ausweichvorgang demnächst nicht mehr möglich ist. Erst wenn die Querbeschleunigung a_quer auch einen zweiten Schwellwert a_thresh_2 überschreit, wird ein Bremssignal S5 an das Bremssystem 2.4 übermittelt.

Mithilfe der Ausweichtrajektorie T(k) wird somit ein Ausweichkriterium K_avoid geprüft, das erfüllt ist, wenn es dem Fahrer theoretisch noch möglich ist, einen Ausweichvorgang einzuleiten. Erst dann wenn das Ausweichkriterium nicht mehr erfüllt ist, ist ein Auslösekriterium K_act erfüllt. Bei Erfüllen des Auslösekriteriums werden beispielsweise von der ECU 2.5 Signale S4 zur Einleitung einer Bremsung an das Bremssystem 2.4 übermittelt. Bevor eine automatische Bremsung eingeleitet wird, können zusätzliche Bremskriterien K_brake geprüft werden, um sicher zu stellen, dass es keine anderen Möglichkeiten mehr gibt, die Kollision zu vermeiden. Dabei kann insbesondere geprüft werden, ob der Fahrer selber noch Bremsen kann, ob der Fahrer schon eine Bremsung eingeleitet hat oder die Längsbeschleunigung a_long einen bestimmten Wert überschreitet.

Ergänzend ist vorteilhafterweise ein Fahrschlauchkriterium K_F angesetzt werden, das teilweise Überlappungen des Fahrzeugs mit dem Objekt 3 berücksichtigt.

Somit ergibt sich ein in Fig. 3 gezeigtes Flussdiagramm des erfindungsgemäßen Verfahrens mit den folgenden Schritten:

St0 startet das Verfahren beispielsweise mit Starten des Eingenfahrzeuges 1 oder einem Initialisieren der ECU 2.5.

In Schritt St1 wird zunächst ein Umfeld 4 des Eigenfahrzeuges 1 beobachtet, z.B. durch das Kamerasystem 2.1 und unterstützend durch die Abstandssensoren 2.2. Bei Erfassen eines Objektes 3 werden die entsprechend aufgenommenen Signale S1 und S2 entweder in einer Verarbeitungseinheit des Kamerasystems 2.1 bzw. der Abstandssensoren 2.2 verarbeitet oder die Signale S1, S2 an die ECU 2.5 übermittelt.

In einem Schritt St2 wird anhand der Signale S1, S2 ermittelt, ob sich das Eigenfahrzeug 1 mit dem Objekt 3 auf einem Kollisionskurs befindet. Dazu werden aus den Signalen S1, S2 dynamische Eigenschaften des Objektes 3 ermittelt und mit den fahrdynamischen Eigenschaften des Eigenfahrzeuges, die mit der Sensorik 2.3 bestimmt werden, verglichen.

Befindet sich das Eigenfahrzeug 1 auf einem Kollisionskurs mit dem Objekt 3, so wird in einem Schritt St3 ein Ausweichkriterium K_avoid bestimmt, das angibt, ob für den Fahrer des Eigenfahrzeuges 1 ein Ausweichen noch möglich ist. Dazu wird in einem Schritt 3.1 anhand des Abstandes L und der Ausweichbreite dy, die sich aus dem lateralen Versatz d_lat und den Breiten w0, w1 des Eigenfahrzeuges 1 bzw. des Objektes 3 ergibt, eine S-förmige Ausweichtrajektorie T(k) bestimmt, die vorzugsweise durch einen gleitenden Sinus (Gleichung 1/2) beschrieben wird.

Im Schritt 3.2 wird anschließend eine maximale Querbeschleunigung a_max ermittelt, die auf das Eigenfahrzeug 1 wirkt, wenn es sich zukünftig auf der Ausweichtrajektorie T(k) bewegt. Anschließend wird diese ermittelte maximale Querbeschleunigung a_max in einem Schritt 3.3 mit mindestens einem Schwellwert a_thresh verglichen. Im Schritt 3.4 wird dann geprüft, ob in Abhängigkeit des Schwellwertes a_thresh das Ausweichkriterium K_avoid erfüllt ist. Somit wird eine Plausibilitätsprüfung durchgeführt, ob das Eigenfahrzeug 1 auf der ermittelten Ausweichtrajektorie T(k) auch sicher ausweichen kann und nicht z.B. durch eine zu hohe auf das Eigenfahrzeug 1 wirkende Querbeschleunigung a_quer umkippen würde.

Ist das Ausweichkriterium K_avoid erfüllt, d.h. ist ein Ausweichen für den Fahrer noch möglich, so wird im Schritt 4 festgestellt, dass das Auslösekriterium K_act für die Bremsung nicht erfüllt ist. Somit wird von der ECU 2.5 so lange kein Signal S5 an das Bremssystem 2.4 übermittelt, so lange ein Ausweichen möglich ist. So kann sichergestellt werden, dass eine Bremsung nicht ohne Grund eingeleitet wird und der Fahrer noch so lange wie theoretisch möglich selber eingreifen kann.

Bezugszeichenliste (Bestandteil der Beschreibung)

| | |
|---|---|
| 1 | Eigenfahrzeug |
| 2.1 | Kamerasystem |
| 2.2 | Abstandssensor |
| 2.3 | Sensorik |
| 2.4 | Bremssystem |
| 2.5 | ECU |
| 3 | Objekt |
| 4 | Umfeld |
| 5 | Fahrschlauch |
| A | Fahrtrichtung |
| a_max | maximale Querbeschleunigung |
| a_quer | Querbeschleunigung |
| a_long | Longitudinalbeschleunigung |
| a_thresh_1,2 | Schwellwerte |
| a,b,c | Skalierungsparameter |
| d_lat | lateraler/senkrechter Versatz der Mittelpunktsachse Objekt - Eigenfahrzeug |
| dt | Zeitraum |
| k | Trajektorienparameter |
| K_avoid | Ausweichkriterium |
| K_act | Auslösekriterium |
| K_F | Fahrschlauchkriterium |
| K_brake | Bremskriterium |

| Kappa | Krümmung von T(k) |
|---|---|
| Kappa_max_1, Kappa_max_2 | Extremwerte der Krümmung |
| L | Abstand Objekt-Eigenfahrzeug in Fahrtrichtung A |
| l_i; i=1...4 | Verbindungsgeraden |
| NP | Nullpunkt |
| OR | Objektraum |
| P_i; i=1...4 | Punkte der Verbindungsgeraden l_i |
| Phi | Kreiswinkel |
| R | Kurvenwinkel |
| r_kr | Abstand Eigenfahrzeug - Nullpunkt |
| r_v | Relativgeschwindigkeit Objekt - Eigenfahrzeug |
| r_a | Relativbeschleunigung Objekt - Eigenfahrzeug |
| s | zurückgelegter Fahrweg |
| S1 | Signal Kamera - ECU |
| S2 | Signal Abstandssensor - ECU |
| S3 | Signal Sensorik - ECU |
| S4 | Signal ECU - Bremssystem |
| T(k) | Ausweichtrajektorie |
| v | Geschwindigkeit Eigenfahrzeug |
| v_0 | Geschwindigkeit vor dem Ausweichen |
| w0 | Breite Eigenfahrzeug |
| w1 | Breite Objekt |
| WP | Wendepunkt |
| w_tol | Toleranzbreite |
| x_max_1 | x-Wert des Extremwertes Kappa_max_1 |
| x_max_2 | x-Wert des Extremwertes Kappa_max_2 |

**Patentansprüche**

1. Verfahren zum Ermitteln eines Auslösekriteriums (K_act) für eine Bremsung eines Eigenfahrzeugs (1) zur Ausgabe von Brems-Signalen (S4) an ein Bremssystem (2.4) zum Verhindern einer unberechtigten Bremsung mit mindestens folgenden Schritten:

   Erfassen mindestens eines Objektes (3) im Umfeld (4) des Eigenfahrzeugs (1) (St1),
   Ermitteln, ob das Eigenfahrzeug (1) mit dem Objekt (3) auf einem Kollisionskurs ist (St2),
   bei Ermittlung eines Kollisionskurses mit dem erfassten Objekt (3),
   Bestimmen mindestens eines Ausweichkriteriums (K_avoid) (St3),
   wobei zur Bestimmung des Ausweichkriteriums (K_avoid) eine S-förmige Ausweichtrajektorie (T(k)) des Eigenfahrzeugs (1) bestimmt wird (St3.1),
   aus der Ausweichtrajektorie (T(k)) mindestens ein Extremwert (a_max) einer Querbeschleunigung (a_quer) des Eigenfahrzeugs (1) ermittelt wird (St3.2),
   der mindestens eine ermittelte Extremwert (a_max) mit mindestens einem Schwellwert (a_thresh) verglichen wird (St3.3),
   **dadurch gekennzeichnet dass**
   das mindestens eine Ausweichkriterium (K_avoid) erfüllt ist, wenn der mindestens eine dem Ausweichkriterium (K_avoid) zugeordnete ermittelte Extremwert (a_max) den Schwellwert (a_thresh) unterschreitet (St3.4), und das Auslösekriterium (K_act) für die Bremsung nicht erfüllt ist, solange das Ausweichkriterium (K_avoid) erfüllt ist (St4).

2. Verfahren nach Anspruch 1, **dadurch gekennzeichnet, dass** die Ausweichtrajektorie (T(k)) als Funktion von Trajektorienparametern (k) beschrieben wird, die Koordinaten eines Koordinatensystems sind.

3. Verfahren nach Anspruch 2, **dadurch gekennzeichnet, dass** die Koordinaten des Koordinatensystems Polarkoordinaten sind, insbesondere ein Kreisradius (r_kr) und ein Kreiswinkel (phi).

4. Verfahren nach Anspruch 2, **dadurch gekennzeichnet, dass** die Koordinaten des Koordinatensystems kartesische Koordinaten (x, y) sind.

**5.** Verfahren nach einem der Ansprüche 2 bis 4, **dadurch gekennzeichnet, dass die** Ausweichtrajektorie (T(k)) mindestens zweimal stetig differenzierbar ist nach mindestens einem Trajektorienparameter, insbesondere dem Kreiswinkel (phi) oder der x-Koordinate (x).

**6.** Verfahren nach einem der Ansprüche 2 bis 5, **dadurch gekennzeichnet, dass** die S-förmige Ausweichtrajektorie (T(k)) als Funktion mindestens eines Trajektorienparameters (k), insbesondere des Kreiswinkels (phi) in Polarkoordinaten oder der x-Koordinate (x) in kartesischen Koordinaten, einen Wendepunkt (WP) aufweist.

**7.** Verfahren nach einem der vorhergehenden Ansprüche, **dadurch gekennzeichnet, dass** die Ausweichtrajektorie (T(k)) eine trigonometrische Funktion enthält, insbesondere als einen additiven Term.

**8.** Verfahren nach Anspruch 7, **dadurch gekennzeichnet, dass** die trigonometrische Funktion nur für die erste Periode von 0 bis 2*Pi bzw. 0° bis 360° betrachtet wird.

**9.** Verfahren nach einem der vorhergehenden Ansprüche, **dadurch gekennzeichnet, dass** die zweite Ableitung der Ausweichtrajektorie (T(k)) eine trigonometrische Funktion enthält.

**10.** Verfahren nach einem der Ansprüche 2 bis 9, **dadurch gekennzeichnet, dass** die Ausweichtrajektorie gegeben ist durch die Funktion T(k) = a*k+b*sin(c*k),

wobei k einer der Trajektorienparameter ist, T(k) die Trajektorie in Abhängigkeit des Trajektorienparameters k und a, b und c Skalierungsparameter sind, die abhängig sind vom Abstand (L) zwischen dem Eigenfahrzeug (1) und dem Objekt (3), von einem lateralen Versatz (dy) zwischen Eigenfahrzeug (1) und Objekt (3) und von der Breite (w0,w1) von Eigenfahrzeug (1) und Objekt (3).

**11.** Verfahren nach Anspruch 10, **dadurch gekennzeichnet, dass** bei der Bestimmung des Abstands (L) zwischen dem Eigenfahrzeug (1) und dem Objekt (3) die Veränderung des Abstandes (L) durch die Eigenbewegung des Objektes (3) während des mittels der Ausweichtrajektorie (T(k)) berechneten Ausweichvorganges berücksichtigt wird und/oder der laterale Versatz (dy) zwischen dem Eigenfahrzeug (1) und dem Objekt (3) zum Zeitpunkt des Erreichens des Objektes (3) durch das Eigenfahrzeug (1) in der Ausweichtrajektorie (T(k)) verwendet wird.

**12.** Verfahren nach einem der vorhergehenden Ansprüche, **dadurch gekennzeichnet, dass** mindestens zwei Schwellwerte (a_thresh) für die Querbeschleunigung (a_quer) verwendet werden, wobei ein erster Querbeschleunigungs-Schwellwert (a_thresh_1) für eine Ausgabe eines Brems-Warnsignals zur Warnung an den Fahrer und ein zweiter Querbeschleunigungs-Schwellwert (a_thresh_2) für eine Ausgabe eines Brems-Steuersignals (S4) an das Bremssystem (2.4) für eine selbsttätige Bremsung vorgesehen ist.

**13.** Verfahren nach Anspruch 12, **dadurch gekennzeichnet, dass** zusätzlich zum Auslösekriterium (K_act) mindestens ein Bremskriterium (K_brake) und/oder ein Fahrschlauchkriterium (K_F) bestimmt wird, so dass bei Erfüllen des Auslösekriteriums (K_act) die Bremse nur dann mit dem Brems-Steuersignal (S4) angesteuert wird, wenn auch das Bremskriterium (K_brake) und/oder das Fahrschlauchkriterium (K_F) erfüllt ist.

**14.** Verfahren nach Anspruch 13, **dadurch gekennzeichnet, dass** das Bremskriterium (K_brake) bei Überschreitung eines zulässigen Längsbeschleunigungswertes (a_long) des Eigenfahrzeugs (1) ausgelöst wird.

**15.** Verfahren nach Anspruch 13 oder 14, **dadurch gekennzeichnet, dass** das Fahrschlauchkriterium (K_F) bei Überschreitung eines zulässigen Fahrschlauch-Schwellwertes (F_thresh) durch das Eigenfahrzeug (1), insbesondere einer Überlappung des Fahrschlauches (5) des Eigenfahrzeuges (1) mit dem Objekt (3) zum aktuellen Zeitpunkt, ausgelöst wird.

**16.** Verfahren nach einem der vorhergehenden Ansprüche, **dadurch gekennzeichnet, dass** mehrere benachbarte Objekte (3) zu einem gemeinsamen Objektraum (OR) zusammengefasst werden, wobei ein Abstand zwischen den benachbarten Objekten (3) geringer ist als eine Breite oder skalierte Breite (w0) des Eigenfahrzeuges.

**17.** Notbremssystem für ein Fahrzeug mindestens enthaltend, ein Kamerasystem (2.1), einen Abstandssensor (2.2), eine Sensorik (2.3), ein Bremssystem (2.4) und eine ECU (2.5) zur Durchführung eines Verfahrens nach einem der vorherigen Ansprüche.

**18.** Fahrzeug, insbesondere Nutzfahrzeug, mit einem Notbremssystem nach Anspruch 17.

**Claims**

1.  Method for determining an activation criterion (K_act) for a brake application in an associated vehicle (1) in order to output brake signals (S4) to a brake system (2.4) in order to prevent an unjustified brake application having at least the following steps:

    Detecting at least one object (3) in the environment (4) of the associated vehicle (1) (St1),
    Determining whether the associated vehicle (1) is on a collision course with the object (3) (St2), in the case of determining a collision course with the detected object (3),
    Determining at least one avoidance criterion (K_avoid) (St3), wherein in order to determining the avoidance criterion (K_avoid) an S-shaped avoidance trajectory (T(k)) of the associated vehicle (1) is determined (St3.1), at least one extreme value (a_max) of a transverse acceleration (a_quer) of the associated vehicle (1) is determined from the avoidance trajectory (T(k)) (St3.2),
    the at least one determined extreme value (a_max) is compared with at least one threshold value (a_thresh) (St3.3),
    **characterized in that** the at least one avoidance criterion (K_avoid) is fulfilled if the at least one detected extreme value (a_max) that is allocated to the avoidance criterion (K_avoid) exceeds the threshold (a_thresh) (St3.4), and
    the activation criterion (K_act) for the brake application is not fulfilled as long as the avoidance criterion (K_avoid) is fulfilled (St4).

2.  Method according to Claim 1, **characterized in that** the avoidance trajectory (T (k)) is described as a function of trajectory parameters (k) that are coordinates of a coordinate system.

3.  Method according to Claim 2, **characterized in that** the coordinates of the coordinate system are polar coordinates, in particular a circle radius (r_kr) and a circle angle (phi).

4.  Method according to Claim 2, **characterized in that** the coordinates of the coordinate system are Cartesian coordinates (x, y).

5.  Method according to any one of Claims 2 to 4, **characterized in that** the avoidance trajectory (T(k)) can be differentiated at least twice continuously according to at least one trajectory parameter, in particular the circle angle (phi) or the x-coordinate (x).

6.  Method according to any one of Claims 2 to 5, **characterized in that** the S-shaped avoidance trajectory (T(k)) comprises a turning point (WP) as a function at least of one trajectory parameter (k), in particular of the circle angle (phi) in polar coordinates or of the x-coordinate (x) in Cartesian coordinates.

7.  Method according to any one of the preceding claims, **characterized in that** the avoidance trajectory (T(k)) comprises a trigonometric function, in particular as an additional term.

8.  Method according to Claim 7, **characterized in that** the trigonometric function is considered only for the first time period of 0 to 2*Pi or 0° to 360°.

9.  Method according to any one of the preceding claims, **characterized in that** the second derivative of the avoidance trajectory (T(k)) comprises a trigonometric function.

10. Method according to any one of Claims 2 to 9, **characterized in that** the avoidance trajectory is produced by means of the function T(k) = a*k+b*sin(c*k),
    wherein k is one of the trajectory parameters, T(k) is the trajectory in dependence upon the trajectory parameter k, and a, b and c are scale parameters that are dependent upon the distance (L) between the associated vehicle (1) and the object (3), upon a lateral displacement (dy) between the associated vehicle (1) and the object (3), and upon the width (w0,w1) of the associated vehicle (1) and the object (3) .

11. Method according to Claim 10, **characterized in that** when determining the distance (L) between the associated vehicle (1) and the object (3), the change in the distance (L) as a result of the associated movement of the object (3) during the avoidance maneuver that is calculated by means of the avoidance trajectory (T(k)) is taken into consideration and/or the lateral displacement (dy) between the associated vehicle (1) and the object (3) at the point in time at which the associated vehicle (1) arrives at the object (3) in the avoidance trajectory (T(k)) is used.

**12.** Method according to any one of the preceding claims, **characterized in that** at least two threshold values (a_thresh) are used for the transverse acceleration (a_quer), wherein a first transverse acceleration threshold value (a_thresh_1) is provided for an output of a brake warning signal to warn the driver and a second transverse acceleration threshold value (a_thresh_2) is used for an output of a brake control signal (S4) to the brake system (2.4) for an automatic brake application.

**13.** Method according to Claim 12, **characterized in that** in addition to the activation criterion (K_act) at least one brake criterion (K_brake) and/or a vehicle path criterion (K_F) is determined so that when the activation criterion (K_act) is fulfilled, the brake is only then controlled by the brake control signal (S4) if the brake criterion (K_brake) and/or the vehicle path criterion (K_F) is also fulfilled.

**14.** Method according to Claim 13, **characterized in that** the brake criterion (K_brake) is activated in the case of a permissible longitudinal acceleration value (a_long) of the associated vehicle (1) being exceeded.

**15.** Method according to Claim 13 or 14, **characterized in that** the vehicle path criterion (K_F) is activated in the case of a permissible vehicle path threshold value (F_thresh) being exceeded by the associated vehicle (1), in particular if the vehicle path (5) of the associated vehicle (1) overlaps with the object (3) at the current point in time.

**16.** Method according to any one of the preceding claims, **characterized in that** multiple adjacent objects (3) are combined to form one common object area (OR), wherein a distance between the adjacent objects (3) is less than a width or scaled width (w0) of the associated vehicle.

**17.** Emergency brake system for a vehicle comprising at least a camera system (2.1), a proximity sensor (2.2), a sensor system (2.3), a brake system (2.4) and an ECU (2.5) for performing a method according to any one of the preceding claims.

**18.** Vehicle, in particular commercial vehicle, having an emergency brake system according to Claim 17.

**Revendications**

**1.** Procédé de détermination d'un critère de déclenchement (K_act) pour un freinage d'un véhicule propre (1) en vue de délivrer des signaux de freinage (S4) à un système de freinage (2.4) afin d'éviter un freinage non justifié, comprenant au moins les étapes suivantes :

détection d'au moins un objet (3) dans l'environnement (4) du véhicule propre (1) (St1),
détermination du fait de savoir si le véhicule propre (1) se trouve sur une trajectoire de collision avec l'objet (3) (St2),
en cas de détermination d'une trajectoire de collision avec l'objet (3), définition d'au moins un critère d'évitement (K_avoid) (St3),
une trajectoire d'évitement (T(k)) en forme de S du véhicule propre (1) étant définie en vue de définir le critère d'évitement (K_avoid) (St3.1),
au moins une valeur extrême (a_max) d'une accélération transversale (a_quer) du véhicule propre (1) étant déterminée à partir de la trajectoire d'évitement (T(k)) (St3.2),
l'au moins une valeur extrême (a_max) étant comparée à au moins une valeur de seuil (a_thresh) (St3.3),
**caractérisé en ce que**
l'au moins un critère d'évitement (K_avoid) est satisfait lorsque l'au moins une valeur extrême (a_max) déterminée associée à l'au moins un critère d'évitement (K_avoid) est inférieure à la valeur de seuil (a_thresh) (St3.4), et
le critère de déclenchement (K_act) pour le freinage n'est pas satisfait tant que le critère d'évitement (K_avoid) est satisfait (St4).

**2.** Procédé selon la revendication 1, **caractérisé en ce que** la trajectoire d'évitement (T(k)) est décrite en tant que fonction de paramètres de trajectoire (k) qui sont les coordonnées d'un système de coordonnées.

**3.** Procédé selon la revendication 2, **caractérisé en ce que** les coordonnées du système de coordonnées sont des coordonnées polaires, notamment un rayon de cercle (r_kr) et un angle de cercle (phi).

4. Procédé selon la revendication 2, **caractérisé en ce que** les coordonnées du système de coordonnées sont des coordonnées cartésiennes (x, y).

5. Procédé selon l'une des revendications 2 à 4, **caractérisé en ce que** la trajectoire d'évitement (T(k)) peut être différenciée en continu au moins deux fois en fonction d'au moins un paramètre de trajectoire, notamment l'angle de cercle (phi) ou la coordonnée x (x) .

6. Procédé selon l'une des revendications 2 à 5, **caractérisé en ce que** la trajectoire d'évitement (T(k)) en forme de S possède un point de retournement (WP) en tant que fonction d'au moins un paramètre de trajectoire (k), notamment l'angle de cercle (phi) dans les coordonnées polaires ou la coordonnée x (x) dans les coordonnées cartésiennes.

7. Procédé selon l'une des revendications précédentes, **caractérisé en ce que** la trajectoire d'évitement (T(k)) contient une fonction trigonométrique, notamment sous la forme d'un terme additif.

8. Procédé selon la revendication 7, **caractérisé en ce que** la fonction trigonométrique n'est prise en compte que pour la première période de 0 à 2*Pi ou de 0° à 360°.

9. Procédé selon l'une des revendications précédentes, **caractérisé en ce que** la deuxième dérivée de la trajectoire d'évitement (T(k)) contient une fonction trigonométrique.

10. Procédé selon l'une des revendications 2 à 9, **caractérisé en ce que** la trajectoire d'évitement est donnée par la fonction T(k) = a*k+b*sin(c*k),
où k désigne l'un des paramètres de trajectoire, T(k) désigne la trajectoire en fonction du paramètre de trajectoire k et a, b et c désignent des paramètres de mise à l'échelle qui sont dépendants de la distance (L) entre le véhicule propre (1) et l'objet (3), d'un décalage latéral (dy) entre le véhicule propre (1) et l'objet (3) et de la largeur (w0, w1) du véhicule propre (1) et de l'objet (3).

11. Procédé selon la revendication 10, **caractérisé en ce que** lors de la détermination de la distance (L) entre le véhicule propre (1) et l'objet (3), la variation de la distance (L) par le mouvement propre de l'objet (3) pendant l'opération d'évitement calculée au moyen de la trajectoire d'évitement (T(k)) est prise en compte et/ou le décalage latéral (dy) entre le véhicule propre (1) et l'objet (3) au moment où l'objet (3) est atteint par le véhicule propre (1) dans la trajectoire d'évitement (T(k)) est utilisé.

12. Procédé selon l'une des revendications précédentes, **caractérisé en ce qu'**au moins deux valeurs de seuil (a_thresh) sont utilisées pour l'accélération transversale (a_quer), une première valeur de seuil d'accélération transversale (a_thresh_1) étant prévue pour une émission d'un signal d'alerte de freinage destiné à avertir un conducteur et une deuxième valeur de seuil d'accélération transversale (a_thresh_2) pour une émission d'un signal de commande de frein (S4) au système de freinage (2.4) pour un freinage automatique.

13. Procédé selon la revendication 12, **caractérisé en ce qu'**en plus du critère de déclenchement (K_act), au moins un critère de freinage (K_brake) et/ou un critère de tunnel de conduite (K_F) sont définis, de sorte que lorsque le critère de déclenchement (K_act) est satisfait, le frein n'est commandé avec le signal de commande de frein (S4) que si le critère de freinage (K_brake) et/ou le critère de tunnel de conduite (K_F) sont également satisfaits.

14. Procédé selon la revendication 13, **caractérisé en ce que** le critère de freinage (K_brake) est déclenché en cas de dépassement d'une valeur d'accélération longitudinale (a_long) admissible du véhicule propre (1).

15. Procédé selon la revendication 13 ou 14, **caractérisé en ce que** le critère de tunnel de conduite (K_F) est déclenché en cas de dépassement d'une valeur de seuil de tunnel de conduite (F_thresh) admissible par le véhicule propre (1), notamment d'un chevauchement du tunnel de conduite (5) du véhicule propre (1) avec l'objet (3) au moment actuel.

16. Procédé selon l'une des revendications précédentes, **caractérisé en ce que** plusieurs objets (3) voisins sont regroupés en un espace d'objet (OR) commun, un écart entre les objets (3) voisins étant inférieur à une largeur ou une largeur mise à l'échelle (w0) du véhicule propre.

17. Système de freinage d'urgence pour un véhicule, comprenant au moins un système de caméra (2.1), un détecteur de distance (2.2), un système de détection (2.3), un système de freinage (2.4) et un bloc de commande électronique (2.5) destiné à mettre en oeuvre un procédé selon l'une des revendications précédentes.

18. Véhicule, notamment véhicule utilitaire, équipé d'un système de freinage d'urgence selon la revendication 17.

# Fig. 1

# Fig. 2

# Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010006214 A1
- EP 1057159 B1
- DE 102009012226 A1
- WO 2008031662 A1
- DE 102009020649 A1